# EUROPÄISCHE PATENTSCHRIFT

(11) **EP 2 735 851 B1**
(45) Veröffentlichungstag und Bekanntmachung des Hinweises auf die Patenterteilung: **22.04.2020**
(21) Anmeldenummer: 12007966.0
(22) Anmeldetag: 27.11.2012
(51) Int. Cl.: G01F 23/26

(54) **Verfahren und Vorrichtung zur kapazitiven Füllstandsmessung mit Kabelsonde oder Stabsonde**
Method and device for capacitive level measurement with cable probe or rod probe
Procédé et dispositif de mesure du niveau de remplissage capacitif avec sonde à câble ou sonde à tige

(43) Veröffentlichungstag der Anmeldung: 28.05.2014
(73) Patentinhaber: Rechner Industrie-Elektronik GmbH, 68623 Lampertheim (DE)
(72) Erfinder: Gebhardt, Stefan, 68623 Lampertheim (FR); Kohler, Armin, Dr., 68623 Lampertheim (FR); Sünkeler, Martin, 23968 Proseken (DE); Bischler, Eduard, 68623 Lampetheim (FR)
(74) Vertreter: Bill, Burkart Hartmut

(56) Entgegenhaltungen:
- WO-A1-2005/111551
- DE-A1- 2 449 097
- DE-A1- 19 528 384
- US-A- 3 901 079

## Beschreibung

Die Erfindung bezieht sich auf ein Verfahren und eine Vorrichtung zur kapazitiven Füllstandsmessung mit Kabelsonden, auch als Seilsonden bezeichnet, oder mit Stabsonden, insbesondere für Analog-Füllstandsmessungen und/oder kombinierte Analog/Grenzwert-Füllstandsmessungen in leitfähigen als auch nichtleitfähigen Behältern.

Für kapazitive Füllstandmessungen in leitfähigen Behältern beruht das am häufigsten angewandte Prinzip darauf, dass ein leitfähiger Stab oder leitfähiges Seil bzw. Kabel als Messelektrode fungierend isoliert im Wesentlichen vertikal in einen leitfähigen Behälter hineinragt und damit eine Kondensatoranordnung zwischen der Messelektrode und der Behälterwand entsteht.

Alle natürlichen Materialien besitzen eine dielektrische Wirkung, ausgedrückt durch ihre relative Permittivitätszahl (DK bzw. εᵣ), oder sie sind elektrisch leitfähig. Bei lagestabiler, im Wesentlichen vertikaler Halterung im Behälter und entsprechender Ausführung der als Sonden bzw. Messfühler bezeichneten Stäbe oder Kabel bzw. Seile, die elektrisch eine Elektrode der Kondensatoranordnung gegenüber der Behälterwand als zweiter Elektrode darstellen, wird eine Kapazitätsänderung durch zwei wesentliche Einflüsse bewirkt.

Im unbefüllten Zustand, d.h. das ganze durch das elektrische Feld der Kondensatoranordnung erfüllte Volumen (Messvolumen) ist leer bzw. mit Luft gefüllt, hat der Kapazitätswert sein Minimum und ist als Bezugswert (Grundkapazität C₀) in idealer Weise konstant. Zwar ist in der Realität diese Konstanz durch parasitäre Einflüsse, wie z.B. Änderung der Luftfeuchtigkeit, nicht absolut zu erreichen, aber in der Relation zu den nachfolgend beschriebenen Effekten jedoch meist vernachlässigbar.

Der Höhe des Füllgutes ist die erste Einflussgröße. Mit steigendem Füllgrad des Messvolumens wächst der Kapazitätswert der Kondensatoranordnung an, um bei 100%-iger Füllung sein Maximum zu erreichen. Dieser Zusammenhang ist die Grundlage für die Ableitung des gewünschten Füllstandssignals. Für die Ableitung eines Füllstandssignals stellt ein zweiter Einfluss jedoch eine Schwierigkeit dar, denn die Steilheit der Kapazitätsänderung bzw. der maximale Kapazitätswert werden durch die Permittivitätszahl des Füllgutes bestimmt.

Die relative Permittivitätszahl εᵣ der zu erfassenden Materialien schwankt in einem großen Bereich. Wegen des starken Messeffektes sind Materialien mit großer relativer Permittivität εᵣ, z.B. organische Stoffe, Lösungsmittel u.ä. mit Werten bei etwa εᵣ = 10, für kapazitive Messungen problemlos.

Vor allem Schüttgüter mit sehr kleinem εᵣ, z.B. εᵣ<1,1 wie bei kleinen Schüttdichten, Folienschnitzeln, Styropor, sind problematisch. Erschwerend kommt hinzu, dass innerhalb des Behälters die Schüttdichten, und damit auch εᵣ, unter Umständen Schwankungen unterliegen können. In der Praxis wird natürlich eine leicht durchschaubare Handhabung für kapazitive Füllstandsmesseinrichtungen gefordert.

Einfache kapazitive Füllstandsmessen dienen vor allem als Grenzwertmessungen, sie liefern Schaltsignale für das Über- oder Unterschreiten vorgegebener Füllstände. Bei den bekannten Grenzwertmessungen wird üblicherweise eine solche Sonde eingesetzt, deren im Einsatz vertikal unteres Ende in einem gewünschten Grenzwertbereich liegt. Dazu ist es vorteilhaft, wenn Sondenkürzungen bzw. Sondenwechsel einfach durchführbar sind. Aufgrund der kapazitiven Messung wird jedoch nicht direkt die Höhe des Füllstandes erfasst sondern eine hierdurch hervorgerufene Kapazität bzw. Kapazitätsänderung gegenüber der Grundkapazität C₀. Bei Inbetriebnahme nach ordnungsgemäßer Installation muss nun somit ein Grenzwertschaltpunkt eingestellt werden, der somit logischerweise auf einen Wert eingestellt wird, der um einen bestimmten Betrag ΔC über der Grundkapazität C₀ liegt. Da jedoch, wie vorstehend aufgezeigt, die Permittivitätszahl der zu erfassenden Materialien stark schwanken kann, ist mit Einstellung des Grenzwertschaltpunktes allein aber die Lage des Grenzwertschaltpunktes, d.h. die bei Erreichen des Grenzwertschaltpunktes sich eingestellte Höhe des Füllstandes der zu erfassenden Materialien unbekannt. Theoretisch kann der Grenzwertschaltpunkt entsprechend einer Lage des Grenzwertschaltpunktes über die Messstrecke hinaus von einem Bereich unterhalb des vertikal unteren Sondenendes bis zum vertikal oberen Sondenende eingestellt werden, also über den gesamten Bereich der möglichen Kapazitätserhöhung gegenüber dem Bezugswert C₀. Ein Abgleich ohne Sichtkontrolle im Behälter ist somit nicht möglich.

Bei Materialien mit kleinem εᵣ kann die dadurch bedingte kleine Kapazitätsänderung bei einem zu groß gewähltem Differenzwert ΔC im ungünstigsten Fall nicht zum Umschalten des Grenzwertsignales ausreichen.

Zur Verbesserung der Abgleichmöglichkeiten von Grenzwertmessungen sind zwei Lösungen bekannt.

Eine Möglichkeit besteht darin, das elektrische Feld der Kondensatoranordnung, welches das Messvolumen bildet, geeignet zu begrenzen. Das ist jedoch bei Kondensatoranordnung mit zwei Elektroden nicht möglich. Zur Messfeldbegrenzung ist mindestens eine zusätzliche dritte Elektrode erforderlich, wie in DE 10 2008 015 052 A1 der selben Anmelderin beschrieben. Weiterhin muss die Erfassung der Kapazitätsänderung nur auf ein eingegrenztes Teilfeld bzw. auf eine Teilkapazität beschränkt werden. Dies erfordert zwangsläufig eine Verbindung der zusätzlichen Elektrode mit der Auswertelektronik über eine koaxiale oder triaxiale Leitungsstruktur. Mit geeigneter Elektrodenausführung innerhalb der Sondenhülsen ist hier daher ein Abgleich des Grenzwertschaltpunktes auch ohne Sicht in den Behälter möglich. Da bei Kabelsonden das Kabel sowohl die Elektrodenfunktion als auch alle mechanischen Anforderungen erfüllen muss, ist die Eignung von Kabelsonden für dieses Prinzip jedoch nicht gegeben. Deshalb sind bisher nur Stabsonden für dieses Messprinzip bekannt, bei denen die isolierende Sondenhülse die erforderliche Stabilität erbringt.

Eine zweite bekannte Lösung zur Verbesserung von Grenzwertmessungen besteht darin, die Sondenfläche im interessierenden Vorzugsmessbereich zu vergrößern. Damit wird die Steilheit der Kapazitätsänderung bezüglich der Füllhöhe in diesem Bereich vergrößert. Üblicherweise wird dazu bei Kabelsonden ein sogenanntes Straffgewicht herangezogen, welches dann mit einem deutlich größeren Durchmesser als das Kabel dimensioniert wird. Das führt zur Verbesserung hinsichtlich der Messstabilität nach oben, verschlechtert aber gleichzeitig die Messstabilität nach unten. Das Straffgewicht hat zwangsläufig eine größere, nach unten gerichtete Fläche und damit eine erhöhte Messsteilheit gegenüber der sich von unten annähernden Füllung.

Analoge Füllstandsmessungen stellen gegenüber lediglich auf Grenzwertmessungen basierenden Füllstandsmessungen noch weitaus größere Anforderungen.

Die bisher aufgeführten Füllstandsmessungen sind gekennzeichnet durch Messfelder, welche das gesamte Behältervolumen ausfüllen. Um ein lineares Ausgangssignal zu erhalten, muss der Kapazitätszuwachs über der Füllhöhe konstant sein. Dazu müssen z.B. der Behälterquerschnitt und der Sondendurchmesser im Messbereich über der Höhe gleichbleibend sein.

Um den genannten Bedingungen gerecht zu werden, sind dazu Messanordnungen bekannt, bei denen die Sonden in einem leitfähigen Rohr mit möglichst kleinem Durchmesser angeordnet werden. Damit entsteht eine Messanordnung in Form eines Zylinderkondensators, bei dem die Feldverzerrungen an den Sondenenden minimal sind. Die Nichtlinearitäten am Messbereichsanfang und am Messbereichsende können so relativ gering gehalten werden.

Bei hochviskosen Flüssigkeiten sowie bei Schüttgütern können solche Zusatzrohre allerdings nicht verwendet werden, womit je nach Behälterdimension mehr oder weniger große Nichtlinearitäten entstehen können, die in der Konsequenz bis zur Unbrauchbarkeit der Messung führen können.

Durch die Messfeldbegrenzung mittels einer weiteren dritten Elektrode ist jedoch auch hier eine Verbesserung der Linearität am Anfang und Ende der Messstrecke möglich.

Ein Hauptproblem analoger kapazitiver Messungen ist jedoch weiterhin die Abhängigkeit von der Permittivität der Füllgüter. In der Praxis kann nur in wenigen Applikationen von konstanten Materialparametern ausgegangen werden. Abgesehen von Produktwechseln führen Änderungen der Schüttdichte, Änderungen des Feuchtegehaltes, Inhomogenitäten u.a.m. zu signifikanten Abweichungen.

Der Abgleich analoger kapazitiver Messungen muss daher immer in zwei Schritten erfolgen, einem "Leerabgleich" und einem "Vollabgleich" mit der entsprechenden Zuordnung der Signalendwerte. Der Leerabgleich erfolgt bei einigen Messsystemen mit leerem Behälter, bei anderen Systemen mit einem definierten Füllstand. In der Praxis kann es allerdings sehr aufwendig sein, wenn ein Behälter mehrfach gefüllt und geleert werden muss. Wenn dann bei jedem Produktwechsel ein neuer Abgleich erforderlich ist, sind solche Messungen nicht mehr sinnvoll.

In der DE 197 49 884 C1 der selben Anmelderin wird ein Messverfahren mit Kompensation von Permittivitätsänderungen beschrieben. Dieses Messverfahren erfordert jedoch einen höheren Aufwand und ist nur mit Stabsonden möglich. Der Messbereich wird ferner mit der Dimensionierung der Sonde festgelegt und ist nachträglich nicht mehr veränderbar.

Alle bisher beschriebenen Messanordnungen setzen darüber hinaus einen elektrisch leitfähigen Behälter voraus. Hierbei wird das gesamte Behältervolumen messtechnisch erfasst. Während auch Material, was sich in einem größeren Abstand von der Sonde befindet, erfasst wird, können Anhaftungen an der Sondenhülse oder inhomogene Materialien wie z.B. Folienschnitzel das Messergebnis nur geringfügig verfälschen.

Von dem durch analoge Füllstandsmessung erhaltenen analogen Signal können dann, wie allgemein bekannt, ein oder mehrere Grenzwertschaltpunkte abgeleitet werden. Diese Grenzwertschaltpunkte können dann aber nur so vertrauenswürdig wie die analoge Messung selbst sein. Bei sicherheitsrelevanten Schaltpunkten sind jedoch stabile Grenzwertschaltpunkte unabhängig von möglicherweise fehlerbehafteten analogen Messungen erforderlich.

Dazu sind analoge Füllstandssonden mit stabilen bzw. materialunabhängigen Grenzwertschaltpunkten bekannt, die über mindestens eine zusätzliche Elektrode an einem Ende der Messstrecke verfügen.

Darüber hinaus ist aus der bereits vorgenannten DE 197 49 884 C1 bekannt, dass eine zusätzliche Elektrode auch unterhalb der Messstrecke als Referenzelektrode ausgeführt ist.

Die durch diese Referenzelektrode geschaffene Referenzstrecke ist mit der Elektronik so verbunden, dass sich bei Änderung der Permittivität des Füllmaterials die Generatoramplitude zur Erzeugung des elektrischen Wechselfeldes derart verändert, dass die Steilheit der Messsignaländerung infolge einer Füllstandsänderung stets konstant bleibt. Der Abgleich des Systems erfolgt nur einmal bei leerem Behälter. Eine zuverlässige Information über die Permittivität des Füllmaterials ist aber nur gegeben, wenn die Referenzelektrode eine ausreichende Länge aufweist, damit eine ausreichende Mittelwertbildung bei Inhomogenitäten stattfindet. Ein sich aus dieser Notwendigkeit ergebender entscheidender Nachteil in der Praxis ist, dass die analoge Messung erst ab einer gewissen Strecke oberhalb der Sondenspitze möglich ist.

US 3 901 079 A beschreibt allgemein eine analoge, permittivitätsunabhängige Messung des Füllstandes einer Flüssigkeit in einem Behälter. Hierbei werden zwei Zylinder parallel zueinander in den Behälter eingetaucht, wobei jeder Zylinder einen Leiter aufweist, der jeweils mit einer Messschaltung verbunden ist. Der Einsatzbereich ist auf Flüssigkeiten eingeschränkt. Zur Gewinnung eines aussagefähigen Referenzwertes muss der Füllpegel an beiden Sonden gleich sein. Damit würden Messungen in Schüttgütern mit zwangsläufig auftretenden Schüttkegeln verfälscht. Materialanhaftungen an den Sonden können ebenfalls Probleme bereiten. Prinzipbedingt kann der Messbereich nicht sehr nahe am Behälterboden beginnen bzw. am Behälterdeckel enden.

In WO 2005/111551 A1 wird eine, von der Permittivität unabhängige Füllstandsmessung beschrieben. Dabei wird eine Stabsonde mit vielen Messsegmenten eingesetzt. Es handelt sich also um eine quasianaloge Messung, deren Auflösung von der Anzahl der Messsegmente bestimmt wird. Die Anregung der die Messsegmente bildenden Elektrodenpaare erfolgt durch einen Generator mit 2 gegenphasigen Ausgängen, die Auswertung erfolgt in einer Brückenschaltung. Damit ergeben sich viele Restriktionen für die Sensordimensionierung. Die Sensoren sind durch die vielen Einzelelektroden mit den erforderlichen Zuleitungen aufwändig und damit technologisch nur mittels Leiterplatten realisierbar. Durch die Eigenschaften von Leiterplatten wird der Temperatureinsatzbereich nach oben eingeschränkt.

DE 195 28 384 A1 beschreibt eine kapazitive Messeinrichtung zur kontinuierlichen Standregelung für Medien unterschiedlicher Dielektrizitätskonstanten. Die Messeinrichtung weist zwei auf einem isolierenden Träger angeordnete Messelektroden mit angrenzenden Schirmelektroden auf und einem Behälter als Gegenelektrode. Eine elektronische Signalverarbeitung ermöglicht eine Gewinnung von Ausgangssignalen, die von Permittivitätsänderungen unabhängig sind.

Aufgabe der Erfindung ist es, eine gegenüber dem Stand der Technik neuartige und in der Anwendung verbesserte Lösung zur Realisierung von kapazitiven Stab- oder Kabelsonden zur Analogmessung und/oder kombinierten Analog-/Grenzstandsmessung anzubieten.

Die Lösung der Aufgabe ist durch Gegenstände mit den Merkmalen der anhängigen unabhängigen Ansprüche gegeben. Entsprechend schlägt die Erfindung ein Verfahren zur kapazitiven Füllstandsmessung vor, mit einer Füllstandssonde, welche sowohl als Kabelsonde oder auch als Stabsonde ausgebildet sein kann, für Füllstandsmessungen für Flüssigkeiten und Schüttgüter in einem Behälter, der sowohl leitfähig als auch nichtleitfähig sein kann, insbesondere für Analog-Füllstandsmessungen und/oder kombinierte Analog/Grenzwert-Füllstandsmessungen. Die Füllstandssonde zur Füllstandsmessung ist im Wesentlichen vertikal in den Behälter eingebracht und erstreckt sich im eingebrachten Zustand somit im Wesentlichen vertikal in den Behälter hinein. Durch wenigstens eine an der Füllstandssonde ausgebildete erste Messelektrode wird eine vertikal verlaufende Messstrecke definiert, wobei eine an dem vertikal unteren Ende der Messstrecke angeordnete untere Begrenzungselektrode eine Begrenzung der Messtrecke mit einem unteren Endpunkt definiert und eine Elektrodenanordnung, welche eine Begrenzungselektrode sowie eine weitere Messelektrode umfasst, eine vertikal obere Begrenzung der Messstrecke mit einem oberen Endpunkt für die Füllstandsmessung ausbildet. Die Elektrodenanordnung und die untere Begrenzungselektrode sind jeweils von der ersten Messelektrode jeweils durch ein Dielektrikum voneinander isoliert, und die Begrenzungselektrode ist von der weiteren Messelektrode der Elektrodenanordnung durch ein Dielektrikum isoliert. Die Erfindung sieht vor, dass jeder der Endpunkte für die Kompensation der durch Permittivitätsänderungen des Füllgutes hervorgerufenen systematischen Verfälschungen herangezogen wird und damit materialunabhängige Analogsignale für beliebig große Messstrecken erhalten werden. Dazu wird die untere Begrenzungselektrode mit einem ersten Anschluss eines ersten Messeingangs einer Messschaltung und die erste Messelektrode mit einem zweiten Anschluss des ersten Messeingangs der Messschaltung verbunden, und die Begrenzungselektrode sowie die weitere Messelektrode der Elektrodenanordnung werden über einen ersten und einen zweiten, voneinander getrennten Anschluss mit einem weiteren Messeingang der Messschaltung verbunden. Eine weitere Elektrode ist entweder durch eine leitfähige Wand des Behälters ausgebildet oder, sofern keine Wand des Behälters leitfähig ist, separat außen an der Wand des Behälters angeordnet, weiterhin sieht die Erfindung vor, dass eine Kapazitätsdifferenz als Differenzsignal aus der an dem ersten Messeingang detektierten Kapazitätsänderung zwischen der unteren Begrenzungselektrode und der weiteren Elektrode des Behälters sowie zwischen der ersten Messelektrode und der weiteren Elektrode des Behälters gebildet wird, und eine Kapazitätsdifferenz als Differenzsignal aus der an dem weiteren Messeingang detektierten Kapazitätsänderung zwischen der Begrenzungselektrode und der weiteren Elektrode des Behälters sowie zwischen der weiteren Messelektrode und der weiteren Elektrode des Behälters gebildet wird.

Die Erfindung schlägt ferner eine zur Durchführung des Verfahrens angepasste Vorrichtung vor.

Bevorzugte Ausführungsformen und Weiterbildungen sind Gegenstand der anhängigen abhängigen Ansprüche.

Demgemäß kann ferner in einer bevorzugten Variante eine analoge Füllstandsmessung mit einem von der Permittivität des Füllgutes unabhängigen Bezugspunkt oder Endpunkt ausgeführt werden.

Weiterhin können während der Analogmessung und davon unabhängig ein oder mehrere von der Permittivität des Füllgutes unabhängige Überfüllsignale zur Verfügung gestellt werden.

Darüber hinaus ist in einer weiteren Variante vorgesehen, dass eine automatische Nachkalibrierung eines Endpunktes der analogen Messung bei Permittivitätsänderungen des Füllgutes durchgeführt werden kann.

Die Erfindung wird nachfolgend anhand einiger bevorzugter jedoch lediglich beispielhafter Ausführungsformen unter Bezugnahme auf die beigefügten Zeichnungen näher beschrieben. In den Zeichnungen zeigen:
- Fig. 1: eine schematische Blockansicht eines erfindungsgemäßen Messsystems mit einer erfindungsgemäßen Vorrichtung zur Durchführung eines erfindungsgemäßen kapazitiven Messverfahrens,
- Fig. 2: eine schematische Ansicht einer Messtrecke bei Durchführung eines erfindungsgemäßen kapazitiven Messverfahrens,
- Fig. 3: eine schematische Ablaufskizze eines erfindungsgemäßen kapazitiven Messverfahrens,
- Fig. 4a, b: Schnittansichten von erfindungsgemäßen Sonden mit Elektrodenanordnungen für permittivitätsunabhängige Nullpunkterkennung für erfindungsgemäße Analogmessungen unter Verwendung eines Stabes und eines Kabels,
- Fig. 5a, b: weitere Schnittansichten von erfindungsgemäßen Sonden mit Elektrodenanordnungen für permittivitätsunabhängige Nullpunkterkennung und automatische Kalibrierung für erfindungsgemäße Analogmessungen unter Verwendung eines Stabes und eines Kabels,
- Fig. 6a, b: weitere Schnittansichten von erfindungsgemäßen Sonden mit Elektrodenanordnungen für permittivitätsunabhängige Grenzwertmessungen mit einem Schaltpunkt und mit zwei Schaltpunkten, und
- Fig. 7a, b: weitere Schnittansichten von erfindungsgemäßen Sonden mit Elektrodenanordnungen für permittivitätsunabhängige Nullpunkterkennung und automatische Kalibrierung innerhalb einer Messstrecke erfindungsgemäßer Analogmessungen unter Verwendung eines Stabes und eines Kabels.

Nachfolgend werden unter Bezugnahme auf die Zeichnungen bevorzugte Ausführungsformen im Rahmen der Erfindung beschrieben.

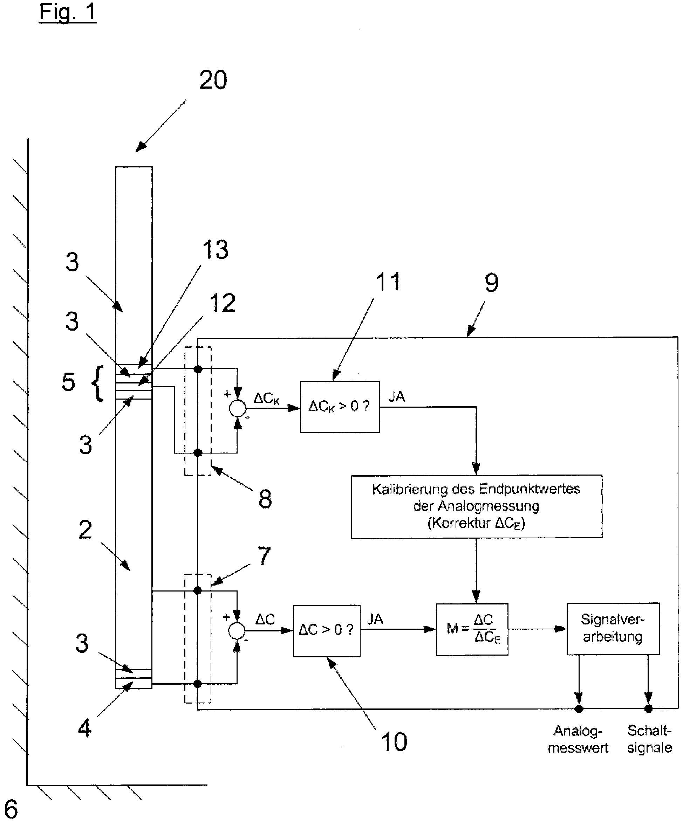

Fig. 1 zeigt z.B. eine schematische Blockansicht eines erfindungsgemäßen Füllstandsmesssystems mit einer erfindungsgemäßen Vorrichtung zur Durchführung eines erfindungsgemäßen kapazitiven Füllstandsmessverfahrens, welches mittels einer kapazitiven Füllstandssonde nach der Erfindung, die als Kabelsonde oder auch als Stabsonde ausgebildet sein kann, den Abgleich mindestens eines Grenzwertes ohne Sicht in einen mit Füllgut zu befüllenden Behälter sowie eine permittivitätsunabhängige Analogmessung ermöglicht.

Der grundsätzliche Aufbau einer im Rahmen der Erfindung eingesetzten Füllstandssonde kann zweckmäßig auf den Ausführungen in DE 10 2008 015 052 A1 basieren und die im Rahmen der Erfindung durchzuführende kapazitive Messung somit das 3-Elektrodenmessprinzip, dessen Ursprung in DE 1 275 777 zu finden ist, als Basis haben.

Bekanntermaßen wird beim 3-Elektrodenmessprinzip ein elektrisches Feld mittels eines Wechselspannungsgenerators zwischen einer Anregungselektrode und einem Anlagenpotential, welches als zweite Elektrode fungiert und in der Regel identisch mit dem Schutzleiterpotential und nur in Ausnahmefällen nicht geerdet ist. Als dritte Elektrode erfasst wenigstens eine Messelektrode die durch die Messobjekte hervorgerufenen Potentialänderungen gegenüber der Anregungselektrode. Damit ist es sinnvoll, das Potential der Anregungselektrode als Bezugspotential zu definieren, das Anlagenpotential ist dann das "heiße" Potential und die Anregungselektrode besitzt damit eine Abschirmwirkung, weshalb sie häufig auch als Schirmelektrode bezeichnet wird. Das weicht zwar vom allgemein üblichen, auf dem Schutzleiterpotential liegenden Bezug ab, ist jedoch für eine verständliche Beschreibung der kapazitiven 3-Elektrodenmessung notwendig. Im Falle einer Füllstandsmessung wird dieses elektrisches Feld innerhalb eines zu befüllenden Behälters gebildet, wobei die Anregungselektrode innerhalb des Behälters angeordnet ist und die leitfähige Wand des Behälters das Anlagenpotential bildet. Sofern die Behälterwand nicht leitfähig ist, ist dementsprechend eine separate Elektrode außen an der Behälterwand zur Bereitstellung des Anlagenpotentials vorzusehen. Die zur kapazitiven Füllstandsmessung vorgesehenen Elektroden der Füllstandssonde werden daraufhin durch das zu detektierende Medium bzw. Füllgut in dem Behälter unterschiedlich an das elektrische Feld angekoppelt und die hierbei hervorgerufenen Kapazitätsänderungen ΔC werden absolut erfasst. Der Wechselspannungsgenerator ist hierbei unabhängig von der kapazitiven Messung. Speziell die Messkapazitäten der zur Füllstandsmessung vorgesehenen Elektroden der Füllstandssonde sind nicht Bestandteil der Generatorschaltung und der Generator wird nicht direkt von deren Elektrodenanordnung beeinflusst. Da diese Zusammenhänge aus der DE 1 275 777 bekannt sind, werden sie hier nicht weiter dargestellt. Zur weiteren Literatur betreffend eine kapazitive 3-Elektrodenmessung, auch bezeichnet z.B. als Dreielektroden-Messprinzip oder Dreielektrodenprinzip, vgl. z.B. Veröffentlichungsreihe "mpa", Bd. 5-2001, Seiten 32 bis 35; Veröffentlichungsreihe "SPS automotive" aus 2005, Seiten 26 und 27.

Gemäß Blockansicht nach Fig. 1 ist eine Füllstandssonde 20 stark vereinfacht dargestellt, die als Kabelsonde oder auch als Stabsonde ausgebildet sein kann. Die Füllstandssonde 20 besitzt zumindest eine erste, als Messelektrode fungierende Elektrodenanordnung 2 sowie wenigstens eine zweite Elektrodenanordnung 4 oder 5. Die Elektrodenanordnungen sind durch ein jeweiliges Dielektrikum 3 voneinander isoliert und sämtliche Zuleitungen zu den Elektrodenanordnungen in den Figuren zwar nicht dargestellt, jedoch geschirmt. Je nach spezieller Ausführung der erfindungsgemäßen Füllstandssonde 20 kann ein Dielektrikum 3 z.B. durch Einbringung von Nuten, wie der DE 10 2008 015 052 A1 zu entnehmen, durch spezielles Füllmaterial, durch Kabelisolation oder ein Trägermaterial bereitgestellt sein. Die zumindest eine erste, als Messelektrode fungierende Elektrodenanordnung 2 bildet hierbei die Messstrecke für die erfindungsgemäße analoge Füllstandsmessung aus, wobei sich die Füllstandssonde 20 und somit auch die Messstrecke nach Einbringung der Füllstandssonde 20 in einen Behälter im Wesentlichen vertikal erstreckt. Jede zweite der wenigstens einen zweiten Elektrodenanordnung 4, 5 definiert somit eine Messstreckenbegrenzung.

Die leitfähige Wand 6 eines solchen Behälters bildet eine weitere Elektrode oder sofern die Wand 6 nicht leitfähig ist, ist eine separat außen an der Behälterwand 6 angeordnete, in den Figuren jedoch nicht dargestellte weitere Elektrode angeordnet, so dass Kapazitätsänderungen aufgrund des Füllstandes eines zu detektierenden Mediums bzw. Füllguts in dem Behälter zwischen dieser weiteren Elektrode und der zumindest einen ersten Elektrodenanordnung 2 sowie zwischen dieser weiteren Elektrode und der wenigstens einen zweiten Elektrodenanordnung 4 oder 5 erfasst werden.

Wie vorstehend beschrieben, kann zur Erzeugung eines hierzu notwendigen elektrischen Feldes innerhalb des Behälters ferner zweckmäßig das 3-Elektrodenmessprinzip angewandt werden, so dass in diesem Fall die Füllstandssonde 20 z.B. eine weitere, im eingebrachten Zustand der Füllstandssonde bevorzugt vertikal oberhalb der zumindest einen ersten Elektrodenanordnung 2 angeordnete, jedoch in den Figuren nicht dargestellte Anregungselektrode aufweist.

Gemäß Ausführungsbeispiel nach Fig. 1 wird folglich ein geometrisch erster definierter Grenzstand am vertikal unteren Ende der Füllstandssonde 20 über eine sich unterhalb der ersten, als Messelektrode fungierenden Elektrodenanordnung 2 vertikal untere zweite, als Begrenzungselektrode fungierende Elektrodenanordnung 4 gewährleistet. Diese zweite, als Begrenzungselektrode fungierende Elektrodenanordnung 4 ist einem ersten Anschluss eines Messeingangs 7 einer Messschaltung 9 zugeordnet, mit welchem Messeingang 7, jedoch mit einem zweiten Anschluss auch die erste, als Messelektrode fungierende Elektrodenanordnung 2 verbunden ist. Eine Kapazitätsänderung zwischen der unteren Begrenzungselektrode 4 und der Behälterwand 6 wirkt sich aber erfindungsgemäß invers zur Kapazitätsänderung zwischen der ersten Messelektrode 2 und der Behälterwand 6 aus. Bevorzugt ist somit eine Differenzschaltung vorgesehen, welche eine Differenz bzw. ein Differenzsignal aus der am Messeingang 7 detektierten Kapazitätsänderung zwischen der unteren Begrenzungselektrode 4 und der Behälterwand 6 und der am Messeingang 7 detektierten Kapazitätsänderung zwischen der ersten Messelektrode 2 und der Behälterwand 6 bildet und also als Differenzsignal eine Kapazitätsdifferenz ΔC zur weiteren Auswertung ausgibt. Die ausgegebene Kapazitätsdifferenz ΔC wird zu weiteren Auswertung einer Einrichtung für eine Plausibilitätsüberprüfung 10 übergeben, welche je nach spezieller Differenzbildung nur eine Auswertung positiver Eingangssignaländerungen ΔC>0 oder negativer Eingangssignaländerungen ΔC<0 zulässt. Anstelle einer Differenzschaltung kann auch zunächst lediglich eine Invertierungsschaltung für eine der beiden detektierten Kapazitätsänderungen und anschließend eine Summenschaltung vorgesehen sein. Eine Summenschaltung würde somit die Summe bzw. das Summensignal aus der z.B. am Messeingang 7 detektierten und anschließend invertierten Kapazitätsänderung zwischen der unteren Begrenzungselektrode 4 und der Behälterwand 6 und der am Messeingang 7 detektierten Kapazitätsänderung zwischen der ersten Messelektrode 2 und der Behälterwand 6 bilden. Der Begriff Differenzschaltung umfasst folglich auch eine aus Invertierungsschaltung und anschließender Summenschaltung zusammengesetzte Schaltung.

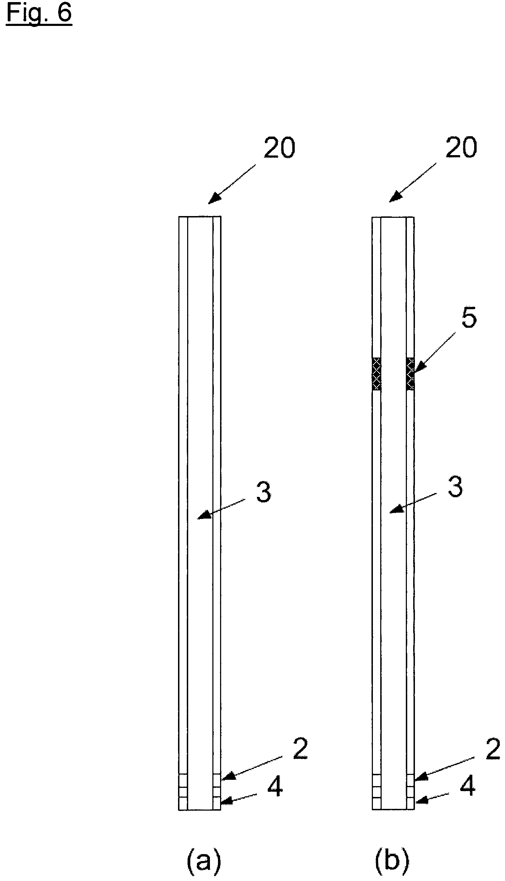

Ist, wie bei Fig. 1 zu sehen, eine Differenzschaltung vorgesehen, welche die am Messeingang 7 detektierte Kapazitätsänderung zwischen der unteren Begrenzungselektrode 4 und der Behälterwand 6 von der am Messeingang 7 detektierten Kapazitätsänderung zwischen der ersten Messelektrode 2 und der Behälterwand 6 subtrahiert, hat demzufolge eine Füllstandserhöhung bis zum vertikal unteren Ende der Messstrecke eine Verringerung der Kapazitätsdifferenz ΔC zur Folge, bis diese durch eine weitere Füllstandszunahme über der ersten, als Messelektrode fungierenden Elektrodenanordnung 2 wieder ansteigt. Ein Ausgleich wird erst dann erreicht, wenn die Messkapazitätsänderung an der Messelektrode 2 betragsmäßig der Änderung an der vertikal unteren Begrenzungselektrode 4 entspricht. Ist in diesem Fall die Einrichtung für die Plausibilitätsüberprüfung 10 derart ausgebildet, dass die Plausibilitätsüberprüfung 10 für den ersten Messeingang 7 gewährleistet, dass nur eine Auswertung positiver Eingangssignaländerungen ΔC>0 zugelassen ist, dann wird z.B. nach einem Abgleich bei leerem Behälter der Grenzstand bzw. Nullpunkt der analogen Messung stets an einer definierten Stelle am vertikal unteren Ende der Messstrecke unabhängig von der Permittivität des Füllgutes detektiert. Entsprechend den nachfolgenden Ausführungen zu Fig. 6a und Fig. 6b kann bei der Ausführungsform nach Fig. 1 die Länge der ersten Elektrodenanordnung, welche als Messelektrode 2 fungiert, auch kürzer ausgeführt werden, sollte aber mindestens der Länge der unteren Begrenzungselektrode 4 entsprechen.

Zur Detektierung eines zweiten definierten Grenzpunktes weist die Füllstandssonde 20 gemäß Ausführungsform nach Fig. 1 eine weitere zweite Elektrodenanordnung 5 auf, die vertikal aus zwei in ihrer Wirkung gegeneinander invertiert wirkenden Elektroden 12 und 13 zusammengesetzt ist. Hierzu sind beide Elektroden 12 und 13 wiederum durch ein Dielektrikum 3 von einander isoliert und die zweite Elektrodenanordnung 5 ist, wie zuvor ausgeführt zudem von der ersten Elektrodenanordnung 2, welche als Messelektrode fungiert, durch ein Dielektrikum 3 von einander isoliert. Die zweite Elektrodenanordnung 5 bildet somit gleichermaßen, jedoch eine vertikal obere Begrenzung der mittels ersten Elektrodenanordnung 2 definierten Messstrecke aus. Beide Elektroden 12 und 13 sind wiederum über getrennte Anschlüsse mit einem weiteren und vom ersten Messeingang 7 unabhängigen Messeingang 8 der Messschaltung 9 verbunden, wobei sich eine Kapazitätsänderung zwischen der Elektrode 12 und der Behälterwand 6 gleichermaßen erfindungsgemäß invers zur Kapazitätsänderung zwischen der ersten Elektrode 13 und der Behälterwand 6 auswirkt. Bevorzugt ist somit eine weitere Differenzschaltung vorgesehen, welche eine Differenz aus der am Messeingang 9 detektierten Kapazitätsänderung zwischen der unteren Elektrode 12 und der Behälterwand 6 und der am Messeingang 9 detektierten Kapazitätsänderung zwischen der ersten Elektrode 13 und der Behälterwand 6 bildet und eine Kapazitätsdifferenz ΔC_{K} zur weiteren Auswertung ausgibt. Die ausgegebene Kapazitätsdifferenz ΔC_{K} wird zu weiteren Auswertung einer Einrichtung für eine Plausibilitätsüberprüfung 11 übergeben, welche je nach spezieller Differenzbildung nur, eine Auswertung positiver Eingangssignaländerungen ΔC_{K} >0 oder negativer Eingangssignaländerungen ΔC_{K} <0 zulässt.

Die zur ersten Elektrodenanordnung 2 benachbart, jedoch durch ein Dielektrikum 3 isoliert angeordnete Elektrode 12 fungiert als eigentliche Begrenzungselektrode zur ersten Elektrodenanordnung 2 und ist gemäß Fig. 1 mit dem zu invertierenden Anschluss des Messeingangs 9 verbunden, und die von der ersten Elektrodenanordnung 2 ausgehend vertikal weiter oben in Bezug auf die Elektrode 12 angeordnete Elektrode 13, welche als eine weitere Messelektrode fungiert, ist mit dem nicht zu invertierenden Anschluss des Messeingangs 9 verbunden. Eine Detektierung des zweiten Grenzpunktes, und also des oberen Endpunktes der durch die erste, als Messelektrode fungierende Elektrodenanordnung 2 gebildeten Messstrecke erfolgt somit ähnlich wie in Bezug auf den ersten Messeingang 7 nur nach erfolgreicher Plausibilitätsüberprüfung 11, d.h. im dargestellten Fall für ausschließlich positive Eingangssignaländerungen ΔC_{K}>0.

Wird der zweite Endpunkt detektiert, wird eine dann entsprechend zur Auswertung zugelassene Eingangssignaländerung bevorzugt als Startsignal für eine automatische Kalibrierung dieses Endpunktes der Analogmessung herangezogen, wie nachfolgend noch detaillierter beschrieben.

Die beschriebenen Wirkungsweisen der Elektrodenanordnungen 2, 4 und 5 sorgen dafür, dass sich die Steilheit der Kapazitätsänderung bei Füllstandsänderung infolge von Permittivitätsänderungen des Füllgutes an jeweils allen Elektroden 2 und 4 und/oder 12 und 13 gleichermaßen verändert. Durch die Kombination aus Begrenzungselektrode 4 und zugehöriger Messelektrode 2 und/oder Begrenzungselektrode 12 und Messelektrode 13 der Elektrodenanordnung 5 werden damit jeweils Grenzstände unabhängig von der Permittivität des Füllgutes immer an der gleichen Position detektiert.

Aufgrund eines an der Füllstandssonde 20 definierten, zweckmäßig vertikal unteren Grenzstandes steht ferner ein konstanter Bezugspunkt/Nullpunkt für eine analoge Messung zur Verfügung. Die analoge Messung erfolgt mit der Messelektrode 2. Die maximale Messstreckenlänge entspricht der Länge dieser Messelektrode 2.

Die zweckmäßig weitere Elektrodenanordnung 5, mit welcher ein vertikal oberer Grenzstand definiert ist, stellt ferner eine Lösung dar, mit der ein von der Analogmessung und der Permittivität des Füllgutes unabhängiger und geometrisch konstanter Grenzwert für beispielsweise ein Überfüllssignal bereit gestellt werden kann.

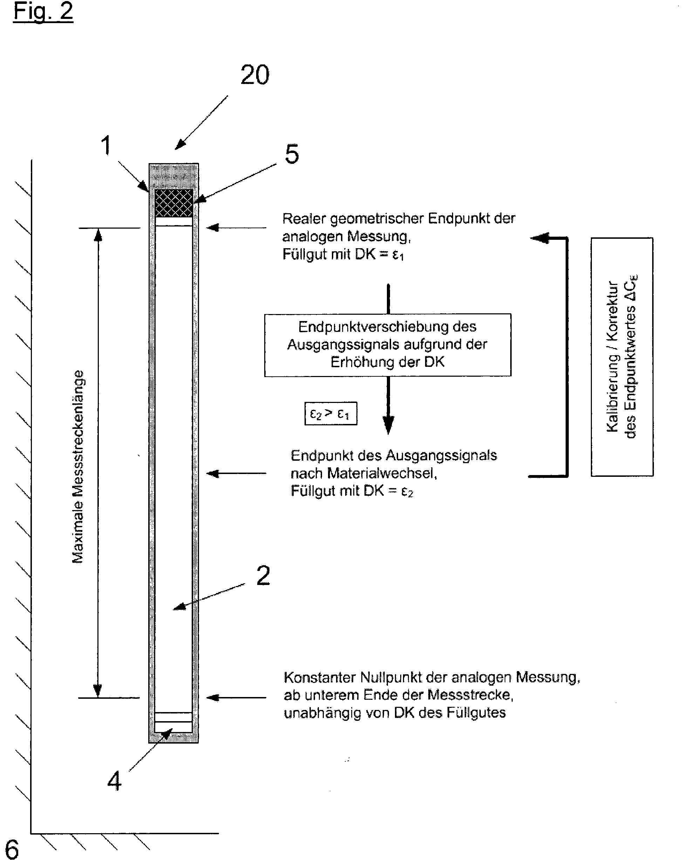

Sind zwei zweite Elektrodenanordnung, gemäß Fig. 1 die Elektrodenanordnung 4 und die Elektrodenanordnung 5 vorgesehen, kann, wie vorstehend bereits angeführt, die über dem vertikal oberen Ende der mittels der ersten Elektrodenanordnung 2 definierten Messstrecke angeordnete Elektrodenanordnung 5 darüber hinaus auch zur Generierung eines, von einer Analogmessung und der Permittivität des Füllgutes unabhängigen, Startsignals zur automatischen Kalibrierung bzw. zur Korrektur des Endpunktes der analogen Messung bei Permittivitätsänderungen des Füllgutes gemäß Fig. 2 dienen.

Der analoge Messwert M wird in diesem Fall, wie in Fig. 1 ausgeführt, durch das Verhältnis ΔC / ΔC_{E} gebildet, wobei ΔC_{E} ein korrigierter bzw. kalibrierter Endpunktwert ist. Erreicht das Füllgut die weitere Elektrodenanordnung 5, wird der reale geometrische Endpunkt detektiert und damit ein Startsignal zur Ausführung einer automatischen Kalibrierung des permittivitätsabhängigen Endpunktwertes ΔC_{E} generiert.

Entsprechend Ausführungsbeispiel nach Fig. 6a können erfindungsgemäße Grenzwertmessungen mit einem material-/ bzw. permittivitätsunabhängigen Schaltpunkt an der Sondenspitze, d.h. am vertikal unteren Ende der Füllsonde im eingebrachten Zustand, nach einem Abgleich bei leerem Behälter und ohne Sicht in den Behälter realisiert werden, indem z.B. die Abmessungen von erster Messelektrode 2 und einer als Nullpunkt-Elektrode fungierenden zweiten Elektrodenanordnung 4 gleich gestaltet werden.
Einen ersten Vorteil stellt die Unempfindlichkeit gegenüber z.B. Tropfen oder Anhaftungen an der Sondenspitze dar. Diese werden nämlich nicht ausgewertet, da das Material an der Sondenspritze hauptsächlich das Messsignal an der als Nullpunkt-Elektrode fungierenden zweiten Elektrodenanordnung 4 beeinflusst und diese z.B. am zu invertierenden Anschluss eines Messeingang angeschlossen ist. Ein zweiter Vorteil ergibt sich in einer scharfen Schaltgrenze, d.h. dass die Umschaltung innerhalb einer Höhenänderung des Füllgutes von wenigen Millimetern erfolgt.

Gleiche Aussagen gelten auch für Mehrfach-Grenzwertmessungen mit beliebig vielen Fixmesspunkten, wie sie beispielhaft in Fig. 6b für einen Schaltpunkt an der Sondenspitze durch die Nullpunkt-Elektrode 4 und die erste Messelektrode 2 und einen zweiten vertikal oberen Schaltpunkt durch die Elektrodenanordnung 5, welche wie bei Fig. 1 ausgehend von der Messelektrode 2 vertikal in Richtung nach oben eine durch ein Dielektrikum 3 von der Messelektrode 2 isolierte Endpunkt-Elektrode 12 und eine wiederum durch ein Dielektrikum 3 von der Endpunkt-Elektrode 12 isolierte weitere Messelektrode 1 besitzt, an einer beliebigen Position entlang der Sonde definiert sind.

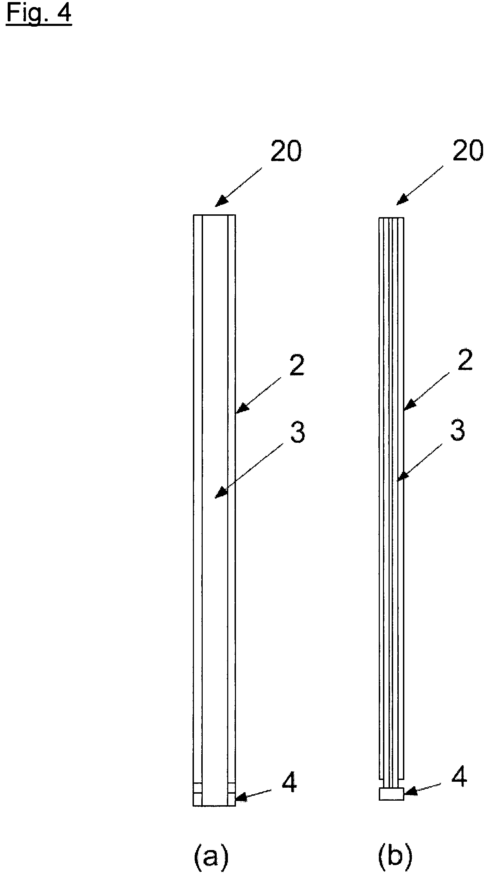

Fig. 4a und Fig. 4b zeigen weitere Ausführungbeispiele von Elektrodenanordnungen für die erfindungsgemäßen Analogmessungen, wobei Fig.4a eine Ausführungsform mittels Stab und Fig. 4b mittels Kabel zeigt, die jeweils über eine Nullpunkt-Elektrode unterhalb einer ersten, als Messelektrode dienen Elektrodenanordnung 2 verfügen. Die somit erste Messelektrode 2 ist dabei deutlich länger als die Nullpunkt-Elektrode 4 ausgeführt. Neben einem materialunabhängigen Nullpunkt zeichnet sich eine mittels dieser Ausführungsformen durchgeführte Analogmessung somit durch eine höhere Linearität am unterem Ende der Messtrecke aus, als es bei Messungen ohne Nullpunktelektrode 4 der Fall ist.

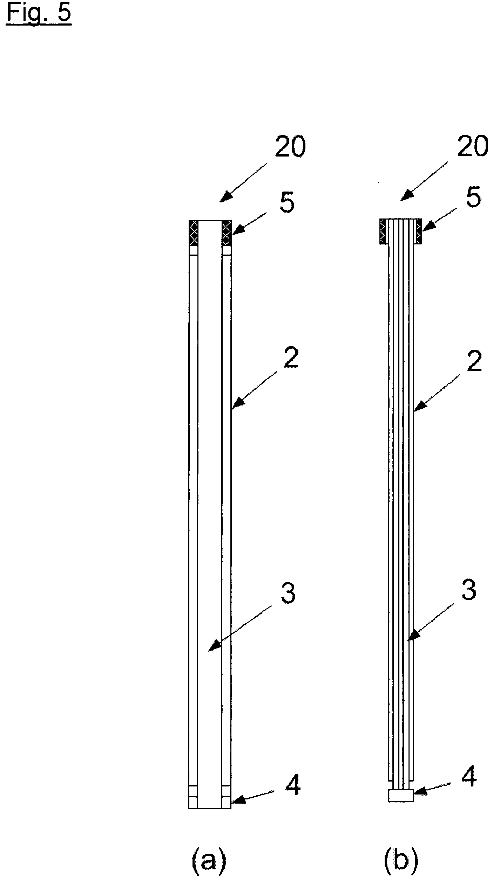

Die Ausführung der genannten Messung mit lediglich einer Nullpunktelektrode führt dazu, dass sich nach Permittivitätsänderungen des Füllgutes, z.B. nach einem Materialwechsel, die Steilheit der Kapazitätszunahme über der Messtrecke verändert. Damit verschiebt sich zwangsläufig der Endpunkt des analogen Ausgangssignals in der Art, dass dieser nicht mehr mit einem, gegenüber der Nullpunktelektrode vertikal oberen realen Endpunkt der analogen Messung übereinstimmt. Vor diesem Hintergrund sind weitere Ausführungsformen für Elektrodenanordnungen gemäß Fig. 5a und Fig. 5b dienlich, wobei Fig.5a wiederum eine Ausführungsform mittels Stab und Fig. 5b mittels Kabel zeigt, die neben der Nullpunkterkennung auch eine automatische Kalibrierung des Endpunktes der Analogmessung und damit eine Linearitätssteigerung am Messstreckenende mittels einer von der analogen Messung unabhängigen weiteren Elektrodenanordnung 5 am vertikal oberen Ende der mittels der ersten Elektrodenanordnung 2 definierten Messstrecke gewährleisten.

Die Vorgänge infolge einer Permittivitätserhöhung sind in Fig. 2 gezeigt, wonach ein durch die Elektrodenanordnung 5 definierter vertikal oberer Grenzstand und also Endpunkt bzw. 100% des analogen Ausgangssignals schon ab der Hälfte der Messtrecke erreicht wird. Bei einer weiteren Füllstandserhöhung kann somit das analoge Signal zwangsläufig nicht weiter ansteigen. Erst wenn der reale geometrische Endpunkt durch die unabhängige Elektrodenanordnung 5 detektiert wird, erfolgt eine Korrektur des Endpunktwertes ΔC_{E}, der dann wieder 100% des Ausgangssignals entspricht. Verringert sich die Permittivität, wird am vertikal oberen Ende der analogen Messstrecke zunächst weniger als 100% angezeigt. Da aber an dieser Stelle auch der obere Grenzstand durch die unabhängige Endpunkt-Elektrode erkannt wird, erfolgt auch hier eine automatische Korrektur de Endpunktwertes ΔC_{E}.

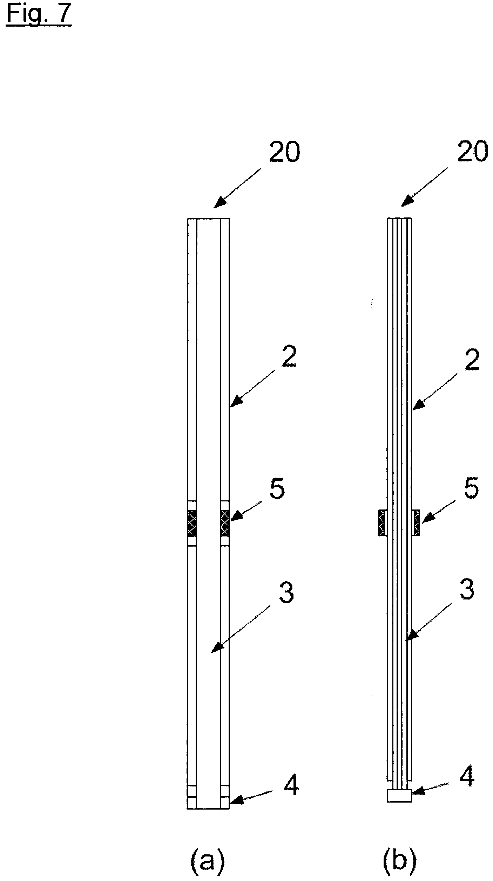

Darüber hinaus können beliebig viele End- bzw. Fixmesspunkte im Bereich von Vorzugsfüllhöhen mittels weiterer Elektrodenanordnungen 5 innerhalb oder oberhalb einer Messstrecke positioniert werden. In Fig. 7a sind beispielhaft Elektrodenanordnungen mit Stab dargestellt, bei der eine weitere Elektrodenanordnung 5 die Messelektrode 2 in zwei Bereiche unterteilt. Wird ein Kabel wie in Fig. 7b verwendet, wird die analoge Messtrecke im Bereich der einen weitere Elektrodenanordnung 5 zumindest abgeschirmt. Für beide Fälle entstehen damit zwangsläufig Unterbrechungen bzw. Nichtlinearitäten in der analogen Messelektrode. Jedoch sind die hierdurch verursachten Messfehler relativ klein gegenüber den Abweichungen, die durch Permitivitätsänderungen resultieren können. Vielmehr können mit der Positionierung innerhalb einer Messstrecke, so dass einzelne Messabschnitte der Messstrecke begrenzt werden, u.U. auch technologische Konflikte bei der Realisierung von Begrenzungselektroden im Bereich des analogen Maximalfüllstandes am oberen Ende der Messstrecke vermieden werden. Dennoch muss man sich in diesem Fall bewusst sein, dass in bei Ausführungsformen nach Fig. 7a und 7b am vertikal oberen Ende der somit in mehreren Messabschnitten begrenzten Messtrecke keine Endpunkt-Elektrodenanordnung existiert und daher dort auch der Vorteil der besseren Linearität nicht mehr gegeben ist.

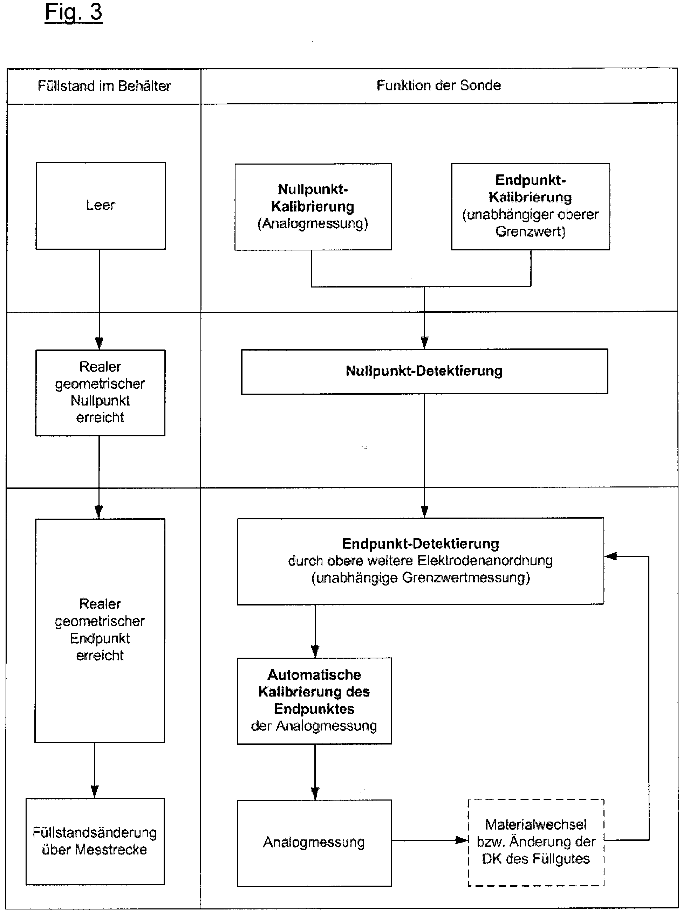

In Fig. 3 ist eine schematische Ablaufskizze eines besonders bevorzugten erfindungsgemäßen Verfahrens zur Detektierung und Kalibrierung des Nullpunktes und eines Endpunktes der Analogmessung dargestellt. Die Kalibrierung des Nullpunktmessung und unabhängigen Endpunktmessung findet bei leerem Behälter statt. Bei jedem Erreichen der Vorzugsfüllhöhe wird der Endpunkt detektiert und die automatische Kalibrierung des Endpunktes der Analogmessung ausgeführt.

Der Ablauf dieses besonders bevorzugten erfindungsgemäßen Verfahrens ist in der nachfolgenden Übersicht nochmals wiedergegeben.

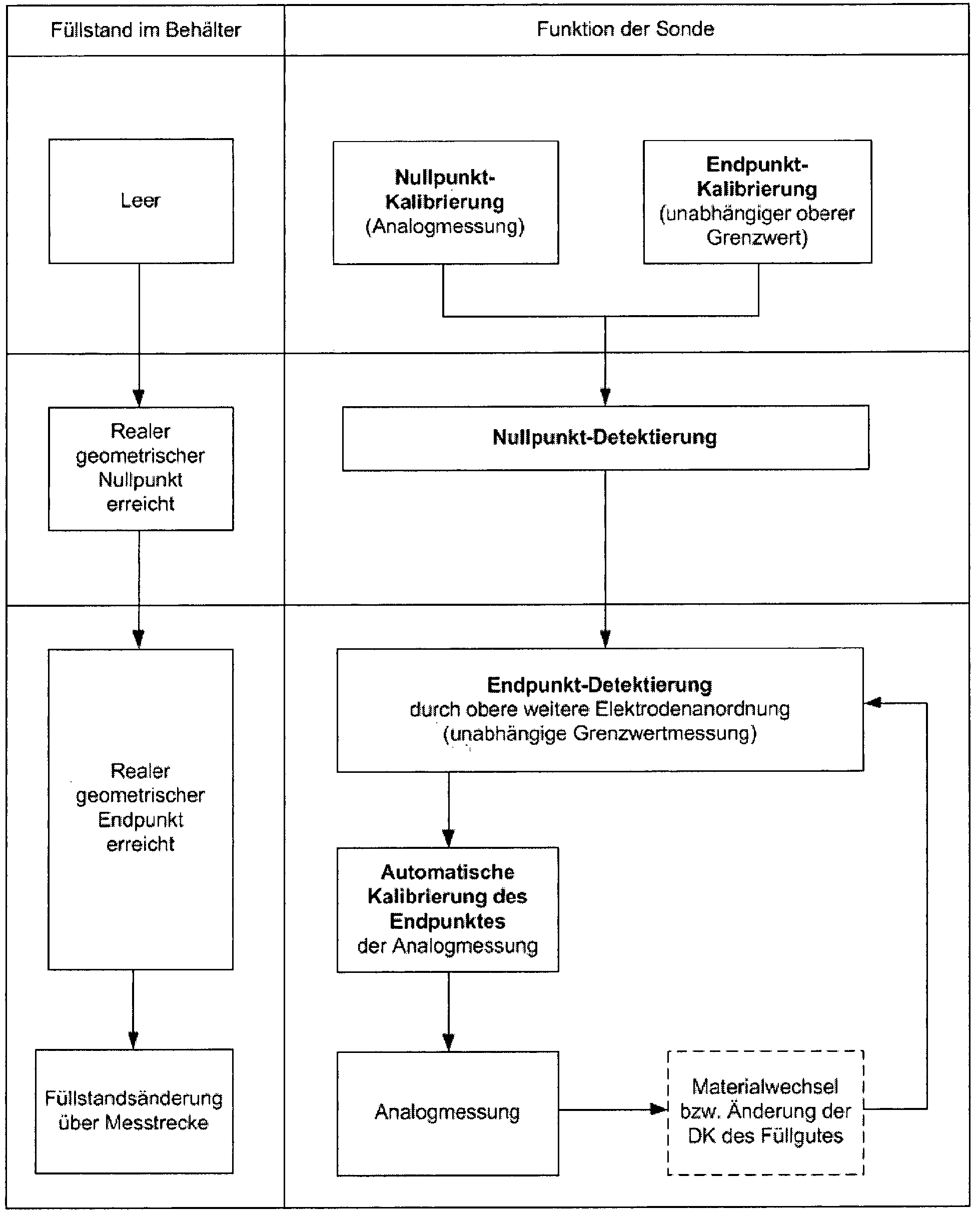

Permittivitätsänderungen des Füllgutes hervorgerufenen systematischen Verfälschungen herangezogen wird und damit materialunabhängig Analogsignale für beliebig große Messstrecken erhalten werden.

Zweckmäßig ist wenigstens ein vertikal unterer Endpunkt an einem vertikal unteren Messstreckenende, der über eine als Nullpunkt-Elektrode dienende zweite Elektrodenanordnung zur Verfügung gestellt wird, die elektrisch mit einem zur analogen Messung zu invertierenden Anschluss desselben Messeingangs verbunden ist. Vorzugsweise ist eine solche Nullpunkt-Elektrode unterhalb des Endes einer maximal möglichen Messstrecke positioniert, um damit stets einen, von der Permittivität des Füllgutes unabhängigen, konstanten Nullpunkt der analogen Messung zu garantieren. Die Nullpunkt-Elektrode ist ferner bevorzugt so klein ausgeführt, dass damit die Analogmessung nahezu ab der Sondenspitze d.h. ab dem vertikal unteren Ende der Sonde im eingebrachten Zustand ermöglichet ist.

Ergänzend oder alternativ ist ein während der Messung zweckmäßig vertikal oberer Endpunkt gleichermaßen mittels einer, von der analogen Messung unabhängigen, weiteren zweiten Elektrodenanordnung zur Verfügung gestellt, wobei ein solcher vertikal oberer Endpunkt auch innerhalb oder oberhalb einer maximal möglichen Analogmessstrecke liegen und auch als Fixpunkt bezeichnet werden kann. Ferner können beliebig viele End- bzw. Fixpunkte innerhalb oder außerhalb der maximal möglichen Messstrecke vorgesehen werden.

Ein solcher vertikal oberer Endpunkt kann ferner zweckmäßig der Gewinnung eines Signals zur Ausführung einer automatischen Kalibrierung bzw. Korrektur des permittivitätsabhängigen Analogwertes im jeweiligen Vorzugsfüllstand dienen.

Ein solcher vertikal oberer Endpunkt kann ferner ergänzend oder alternativ zweckmäßig als eine Überfülleinrichtung herangezogen werden, mit der ein von der analogen Messung unabhängiges Überfüllsignal zur Verfügung gestellt wird.

Folglich wird an jedem Endpunkt jeweils eine Elektrode einer jeweiligen zusätzlichen zweiten Elektrodenanordnung mit einem ersten Anschluss eines jeweiligen Messeingangs verbunden und eine zu dieser Elektrode benachbart, jedoch durch ein Dielektrikum isoliert angeordnete Elektrode mit einem zweiten Anschluss des jeweiligen Messeingangs verbunden, wobei jeweils das über den ersten oder den zweiten Anschluss eines gemeinsamen Messeingangs erhaltene Signal vor der weiteren Auswertung invertiert wird. Die weitere Auswertung erfolgt somit zweckmäßig über ein hierdurch resultierendes Differenzsignal. ΔC wird zu weiteren Auswertung einer Einrichtung für eine

Wird ein vertikal oberer End- bzw. Fixpunkt detektiert, wird ein dann entsprechend erhaltenes Signal, welches gemäß vorstehender Beschreibung folglich einem zur Auswertung zugelassenen Differenzsignal entspricht, bevorzugt als Startsignal für eine automatische Kalibrierung dieses Endpunktes der Analogmessung herangezogen.

Ein wesentlicher Vorteil ist, dass mit der Erfindung somit ein Abgleich eines Nullpunktes bzw. die Nullpunktkalibrierung der Analogmessung bei leerem Behälter erfolgen kann und zwar ohne Sicht in den Behälter.

Ein weiterer wesentlicher Vorteil ist, dass mit der Erfindung somit auch ein Abgleich eines oberen Endpunkts bzw. eine obere Endpunktkalibrierung bei leerem Behälter erfolgen kann und zwar ohne Sicht in den Behälter.

### Bezugszeichenliste

- 1: Elektrisch isolierende Hülle;
- 2: erste, als Messelektrode fungierende Elektrodenanordnung mit geschirmter Zuleitung;
- 3: Dielektrikum (z.B. Träger, Füllmaterial, Kabelisolation);
- 4: erste zweite, als untere Begrenzungselektrode bzw. Nullpunkt-Elektrode fungierende Elektrodenanordnung mit geschirmter Zuleitung;
- 5: weitere zweite Elektrodenanordnung mit geschirmter Zuleitung;
- 6: Behälter;
- 7: Erster Messeingang;
- 8: Weiterer Messeingang;
- 9: Messschaltung;
- 10: Plausibilitätsüberprüfung für den ersten Messeingang;
- 11: Plausibilitätsüberprüfung für den weiteren Messeingang;
- 12: Obere Begrenzungselektrode bzw. Endpunkt-Elektrode der weiteren zweiten Elektrodenanordnung;
- 13: Weitere Messelektrode der weiteren zweiten Elektrodenanordnung;
- 20: Füllstandssonde;
- DK: relative Permittivität des Füllgutes;

## Patentansprüche

1. Verfahren zur kapazitiven Füllstandsmessung mit einer Füllstandssonde (20), welche sowohl als Kabelsonde oder auch als Stabsonde ausgebildet sein kann, für Füllstandsmessungen für Flüssigkeiten und Schüttgüter in einem Behälter (6), der sowohl leitfähig als auch nichtleitfähig sein kann, insbesondere für Analog-Füllstandsmessungen und/oder kombinierte Analog/Grenzwert-Füllstandsmessungen, aufweisend
eine im Wesentlichen vertikal in den Behälter (6) eingebrachte Füllstandssonde (20) zur Füllstandsmessung eines Füllgutes, so dass sich die Füllstandssonde (20) im eingebrachten Zustand im Wesentlichen vertikal in den Behälter (6) hinein erstreckt,
wobei durch eine an der Füllstandssonde (20) ausgebildete erste Messelektrode (2) eine vertikal verlaufende Messstrecke für die Füllstandsmessung definiert wird, eine am vertikal unteren Ende dieser Messstrecke angeordnete untere Begrenzungselektrode (4) eine Begrenzung der Messtrecke mit einem unteren Endpunkt definiert,
eine Elektrodenanordnung (5) eine vertikal obere Begrenzung der Messstrecke mit einem oberen Endpunkt für die Füllstandsmessung ausbildet und eine Begrenzungselektrode (12) sowie eine weitere Messelektrode (13) umfasst,
wobei sowohl die Elektrodenanordnung (5) als auch die untere Begrenzungselektrode (4) jeweils von der ersten Messelektrode (2) sowie die Begrenzungselektrode (12) von der weiteren Messelektrode (13) der Elektrodenanordnung (5) jeweils durch ein Dielektrikum voneinander isoliert sind,
wobei der untere und der obere Endpunkt der Messstrecke für die Kompensation der durch Permittivitätsänderungen des Füllgutes hervorgerufenen systematischen Verfälschungen herangezogen wird und damit materialunabhängige Analogsignale für beliebig große Messstrecken erhalten werden und eine materialunabhängige Detektierbarkeit des jeweiligen Endpunktes bewirkt wird, indem die untere Begrenzungselektrode (4) mit einem ersten Anschluss eines ersten Messeingangs (7) einer Messschaltung (9) und die erste Messelektrode (2) mit einem zweiten Anschluss des ersten Messeingangs (7) der Messschaltung (9) verbunden wird und die Begrenzungselektrode (12) sowie die weitere Messelektrode (13) der Elektrodenanordnung (5) über einen ersten und einen zweiten, voneinander getrennten Anschluss mit einem weiteren Messeingang (8) der Messschaltung (9) verbunden werden,
und ferner eine weitere Elektrode entweder durch eine leitfähige Wand des Behälters (6) ausgebildet ist oder, sofern keine Wand des Behälters (6) leitfähig ist, separat außen an der Wand des Behälters (6) angeordnet ist,
wobei eine Kapazitätsdifferenz als Differenzsignal aus der an dem ersten Messeingang (7) detektierten Kapazitätsänderung zwischen der unteren Begrenzungselektrode (4) und der weiteren Elektrode des Behälters (6) sowie zwischen der ersten Messelektrode (2) und der weiteren Elektrode des Behälters (6) gebildet wird und eine Kapazitätsdifferenz als Differenzsignal aus der an dem weiteren Messeingang (8) detektierten Kapazitätsänderung zwischen der Begrenzungselektrode (12) und der weiteren Elektrode des Behälters (6) sowie zwischen der weiteren Messelektrode (13) und der weiteren Elektrode des Behälters (6) gebildet wird.

2. Verfahren nach Anspruch 1, **dadurch gekennzeichnet, dass** ein vertikal oberer Endpunkt mittels einer solchen, von der analogen Messung unabhängigen, zusätzlichen zweiten Elektrodenanordnung (5) zur Verfügung gestellt wird.

3. Verfahren nach Anspruch 2, **dadurch gekennzeichnet, dass** die zusätzliche zweite Elektrodenanordnung (5), durch welche ein vertikal oberer Endpunkt bzw. Fixpunkt zur Verfügung gestellt wird, innerhalb oder vertikal oberhalb einer maximal möglichen Messstrecke der Füllstandssonde ausgebildet wird.

4. Verfahren nach Ansprüchen 1-3; **dadurch gekennzeichnet, dass** beliebig viele vertikal obere Endpunkte bzw. Fixpunkte innerhalb oder außerhalb einer maximal möglichen Messstrecke der Füllstandssonde ausgebildet werden.

5. Verfahren nach Anspruch 1 bis 4, **dadurch gekennzeichnet, dass** wenigstens ein Endpunkt bzw. Fixpunkt zur Gewinnung eines Signals zur Ausführung einer automatischen Kalibrierung bzw. Korrektur eines permittivitätsabhängigen Analogwertes im jeweiligen Vorzugsfüllstand herangezogen wird.

6. Verfahren nach Anspruch 1 bis 5, **dadurch gekennzeichnet, dass** wenigstens ein vertikal unterer Endpunkt mittels einer von der analogen Messung unabhängigen, als Nullpunkt-Elektrode dienenden zusätzlichen zweiten Elektrodenanordnung (4) zur Verfügung gestellt wird.

7. Verfahren nach Anspruch 6, **dadurch gekennzeichnet, dass** die als Nullpunkt-Elektrode (4) dienende zusätzliche zweite Elektrodenanordnung (4) unterhalb der maximal möglichen Messstrecke der Füllstandssonde positioniert wird.

8. Verfahren nach Anspruch 6 oder 7, **dadurch gekennzeichnet, dass** die als Nullpunkt-Elektrode dienende zusätzliche zweite Elektrodenanordnung (4) so klein ausgeführt wird, dass damit eine Analogmessung nahezu ab Sondenspitze ermöglicht wird.

9. Verfahren nach Anspruch 1 bis 8, **dadurch gekennzeichnet, dass** wenigstens ein vertikal oberer Endpunkt mittels einer zusätzlichen zweiten Elektrodenanordnung (5) zur Verfügung gestellt wird, welcher als eine Überfülleinrichtung herangezogen wird, mit der ein von der analogen Messung unabhängiges Überfüllsignal zur Verfügung gestellt wird.

10. Verfahren nach einem der Ansprüche 1 bis 9, **dadurch gekennzeichnet, dass** an einem Fixpunkt jeweils eine Elektrode einer jeweiligen zusätzlichen zweiten Elektrodenanordnung (4, 5) mit einem ersten Anschluss eines jeweiligen Messeingangs (7, 8) verbunden wird, und eine zu dieser Elektrode benachbart, jedoch durch ein Dielektrikum isoliert angeordnete Elektrode mit einem zweiten Anschluss des jeweiligen Messeingangs (7, 8) verbunden wird, wobei jeweils das über den ersten oder den zweiten Anschluss eines gemeinsamen Messeingangs erhaltene Signal invertiert und anschließend für die Kompensation der durch Permittivitätsänderungen des Füllgutes hervorgerufenen systematischen Verfälschungen herangezogen wird.

11. Verfahren nach einem der Ansprüche 1 bis 10, **dadurch gekennzeichnet, dass** bei Detektierung eines vertikal oberen End- bzw. Fixpunktes ein dann entsprechend erhaltenes Signal als Startsignal für eine automatische Kalibrierung dieses Endpunktes der Analogmessung herangezogen wird.

12. Vorrichtung zur Durchführung eines Verfahrens nach einem der vorstehenden Ansprüche, umfassend eine Füllstandssonde (20), eine Messschaltung (9) und einen Behälter (6) zur Aufnahme der Füllstandssonde (20),
wobei die Füllstandssonde (20) zur Füllstandsmessung eines Füllgutes im Wesentlichen vertikal in den Behälter (6) einbringbar ist, so dass sich die Füllstandssonde (20) im eingebrachten Zustand im Wesentlichen vertikal in den Behälter (6) hinein erstreckt,
wobei die Füllstandssonde (20)
- eine an der Füllstandssonde (20) ausgebildete erste Messelektrode (2), die eine vertikal verlaufende Messstrecke für die Füllstandsmessung ausbildet,
- eine am vertikal unteren Ende der Füllstandssonde (20) angeordnete untere Begrenzungselektrode (4), welche eine untere Begrenzung der Messstrecke mit einem unteren Endpunkt definiert, und
- eine Elektrodenanordnung (5), welche eine vertikal obere Begrenzung der Messstrecke mit einem oberen Endpunkt für die Füllstandsmessung ausbildet und eine Begrenzungselektrode (12) sowie eine weitere Messelektrode (13) umfasst,
aufweist,
wobei sowohl die Elektrodenanordnung (5) als auch die untere Begrenzungselektrode (4) jeweils von der ersten Messelektrode (2) sowie die Begrenzungselektrode (12) von der weiteren Messelektrode (13) der Elektrodenanordnung (5) durch ein Dielektrikum voneinander isoliert sind, wobei die Messschaltung (9) einen ersten Messeingang (7) und einen weiteren Messeingang (8) mit jeweils einem ersten und einem zweiten Anschluss aufweist, wobei eine materialunabhängige Detektierbarkeit des unteren und oberen Endpunktes der Messstrecke bewirkt wird, indem die untere Begrenzungselektrode (4) mit dem ersten Anschluss des ersten Messeingangs (7) und die erste Messelektrode (2) mit dem zweiten Anschluss des ersten Messeingangs (7) verbunden ist, und die Begrenzungselektrode (12) sowie die weitere Messelektrode (13) der Elektrodenanordnung (5) über einen ersten und einen zweiten, voneinander getrennten Anschluss mit dem weiteren Messeingang (8) verbunden sind, und
wobei der Behälter (6) eine weitere Elektrode aufweist, welche entweder als leitfähige Wand des Behälters (6) ausgebildet ist oder separat außen an der Wand des Behälters (6) angeordnet ist,
wobei die Messschaltung (9) an dem ersten und an dem weiteren Messeingang (7, 8) jeweils eine Differenzschaltung besitzt, welche zum Ausgeben einer Kapazitätsdifferenz als Differenzsignal für eine Kompensation der durch Permittivitätsänderungen des Füllgutes hervorgerufenen systematischen Verfälschungen ausgebildet ist derart, dass ein Differenzsignal aus einer an dem ersten Messeingang (7) detektierten Kapazitätsänderung zwischen der unteren Begrenzungselektrode (4) und der weiteren Elektrode des Behälters (6) sowie zwischen der ersten Messelektrode (2) und der weiteren Elektrode des Behälters (6) gebildet wird und ein Differenzsignal aus einer an dem weiteren Messeingang (8) detektierten Kapazitätsänderung zwischen der Begrenzungselektrode (12) und der weiteren Elektrode des Behälters (6) sowie zwischen der weiteren Messelektrode (13) und der weiteren Elektrode des Behälters (6) gebildet wird.

13. Vorrichtung nach Anspruch 12, **dadurch gekennzeichnet, dass** die Messschaltung (9) eine Einrichtung zur Plausibilitätsüberprüfung (10) besitzt, welche ausgebildet ist, das Differenzsignal für die Kompensation der durch Permittivitätsänderungen des Füllgutes hervorgerufenen systematischen Verfälschungen entweder nur bei positivem Differenzsignal oder bei negativem Differenzsignal für eine Auswertung zuzulassen.

## Claims

1. Method for capacitive fill level measurement comprising a fill level probe (20) which can be designed both as a cable probe or a rod probe, for fill level measurements for liquids and bulk materials in a container (6) which can be both conductive and non-conductive, in particular for analogue fill level measurements and/or combined analogue/threshold value fill level measurements, having
a fill level probe (20), which is introduced substantially vertically into the container (6), for measuring the fill level of a filling material so that the fill level probe (20) extends, in the introduced state, substantially vertically into the container (6),
wherein, by means of a first measuring electrode (2) formed on the fill level probe (20), a vertically extending measuring section for the fill level measurement is defined, a lower boundary electrode (4) arranged on the vertically lower end of this measuring section defines a boundary of the measuring section with a lower end point,
an electrode assembly (5) forms a vertically upper boundary of the measuring section with an upper end point for the fill level measurement and comprises a boundary electrode (12) and a further measuring electrode (13),
wherein both the electrode assembly (5) and the lower boundary electrode (4) are each insulated from the first measuring electrode (2), and the boundary electrode (12) is insulated from the further measuring electrode (13) of the electrode assembly (5) in each case by means of a dielectric with respect to one another,
wherein the lower and the upper end point of the measuring section is used for compensating for the systematic falsifications caused by permittivity changes in the filling material and therefore material-independent analogue signals are obtained for measuring sections of any size and a material-independent detectability of the respective end point is effected, in that the lower boundary electrode (4) is connected to a first terminal of a first measuring input (7) of a measuring circuit (9) and the first measuring electrode (2) is connected to a second terminal of the first measuring input (7), of the measuring circuit (9), and the boundary electrode (12) and the further measuring electrode (13) of the electrode assembly (5) are connected to a further measuring input (8) of the measuring circuit (9) via a first terminal and a second terminal which are separate from one another,
and furthermore a further electrode is formed either by a conductive wall of the container (6) or, if no wall of the container (6) is conductive, is arranged separately outside on the wall of the container (6),
wherein a capacitance difference is formed as a difference signal from the capacitance change, which is detected at the first measuring input (7), between the lower boundary electrode (4) and the further electrode of the container (6) and between the first measuring electrode (2) and the further electrode of the container (6), and a capacitance difference is formed as a difference signal from the capacitance change, which is detected at the further measuring input (8), between the boundary electrode (12) and the further electrode of the container (6) and between the further measuring electrode (13) and the further electrode of the container (6).

2. Method as claimed in claim 1, **characterised in that** a vertically upper end point is provided by means of such an additional second electrode assembly (5) which is independent of the analogue measurement.

3. Method as claimed in claim 2, **characterised in that** the additional second electrode assembly (5) which serves to provide a vertically upper end point or fixed point is formed inside or vertically above a maximum possible measuring section of the fill level probe.

4. Method as claimed in claims 1-3, **characterised in that** any number of vertically upper end points or fixed points are formed inside or outside a maximum possible measuring section of the fill level probe.

5. Method as claimed in claims 1 to 4, **characterised in that** at least one end point or fixed point is used in order to obtain a signal for performing an automatic calibration or correction of a permittivity-dependent analogue value in the respective preferred fill level.

6. Method as claimed in claims 1 to 5, **characterised in that** at least one vertically lower end point is provided by means of an additional second electrode assembly (4) which is independent of the analogue measurement and serves as a zero point electrode.

7. Method as claimed in claim 6, **characterised in that** the additional second electrode assembly (4) which serves as a zero point electrode (4) is positioned below the maximum possible measuring section of the fill level probe.

8. Method as claimed in claim 6 or 7, **characterised in that** the additional second electrode assembly (4) which serves as a zero point electrode is designed so small as to enable an analogue measurement almost from the probe tip.

9. Method as claimed in claims 1 to 8, **characterised in that** at least one vertically upper end point is provided by means of an additional second electrode assembly (5) which is used as an overfilling apparatus, with which an overfilling signal which is independent of the analogue measurement is provided.

10. Method as claimed in any one of claims 1 to 9, **characterised in that** an electrode of a respective additional second electrode assembly (4, 5) is connected at a fixed point in each case to a first terminal of a respective measuring input (7, 8), and an electrode which is arranged adjacent to this electrode but insulated by a dielectric is connected to a second terminal of the respective measuring input (7, 8), wherein in each case the signal obtained via the first or the second terminal of a common measuring input is inverted and subsequently used for compensating for the systematic falsifications produced by permittivity changes in the filling material.

11. Method as claimed in any one of claims 1 to 10, **characterised in that**, during detection of a vertically upper end point or fixed point, a then correspondingly obtained signal is used as a start signal for an automatic calibration of this end point of the analogue measurement.

12. Device for performing a method as claimed in any one of the preceding claims, comprising a fill level probe (20), a measuring circuit (9) and a container (6) for receiving the fill level probe (20),
wherein the fill level probe (20) for measuring the fill level of a filling material can be introduced substantially vertically into the container (6) so that the fill level probe (20) extends, in the introduced state, substantially vertically into the container (6),
wherein the fill level probe (20)
- has a first measuring electrode (2) which is formed on the fill level probe (20) and forms a vertically extending measuring section for the fill level measurement,
- has a lower boundary electrode (4) which is arranged on the vertically lower end of the fill level probe (20) and defines a lower boundary of the measuring section with a lower end point, and
- has an electrode assembly (5) which forms a vertically upper boundary of the measuring section with an upper end point for the fill level measurement and comprises a boundary electrode (12) and a further measuring electrode (13),
wherein both the electrode assembly (5) and the lower boundary electrode (4) are each insulated from the first measuring electrode (2), and the boundary electrode (12) is insulated from the further measuring electrode (13) of the electrode assembly (5) by means of a dielectric with respect to one another, wherein the measuring circuit (9) has a first measuring input (7) and a further measuring input (8) each with a first and a second terminal, wherein a material-independent detectability of the lower and upper end point of the measuring section is effected, in that the lower boundary electrode (4) is connected to the first terminal of the first measuring input (7) and the first measuring electrode (2) is connected to the second terminal of the first measuring input (7), and the boundary electrode (12) and the further measuring electrode (13) of the electrode assembly (5) are connected to the further measuring input (8) via a first terminal and a second terminal which are separate from one another, and wherein the container (6) has a further electrode which is formed either as a conductive wall of the container (6) or is arranged separately outside on the wall of the container (6),
wherein the measuring circuit (9) has, on the first and on the further measuring input (7, 8), a differential circuit in each case which is designed to output a capacitance difference as a difference signal for compensating for the systematic falsifications caused by permittivity changes in the filling material such that a difference signal is formed from a capacitance change, which is detected at the first measuring input (7), between the lower boundary electrode (4) and the further electrode of the container (6) and between the first measuring electrode (2) and the further electrode of the container (6), and a difference signal is formed from a capacitance change, which is detected at the further measuring input (8), between the boundary electrode (12) and the further electrode of the container (6) and between the further measuring electrode (13) and the further electrode of the container (6).

13. Device as claimed in claim 12, **characterised in that** the measuring circuit (9) has a device for plausibility checking (10) which is designed to allow the difference signal for compensating for the systematic falsifications caused by permittivity changes in the filling level either only in the case of a positive difference signal or in the case of a negative difference signal for an evaluation.

## Revendications

1. Procédé pour une mesure capacitive d'un niveau de remplissage avec une sonde de niveau de remplissage (20), qui peut être conçue tant comme une sonde à câble que comme une sonde à tige, pour des mesures de niveau de remplissage pour des liquides et des matériaux en vrac dans un contenant (6) qui peut être tant conducteur que non conducteur, en particulier pour des mesures de niveau de remplissage analogiques et/ou des mesures combinées de niveau de remplissage analogiques/de valeurs limites, présentant
une sonde de niveau de remplissage (20) introduite essentiellement à la verticale dans le contenant (6) pour mesurer le niveau de remplissage d'un matériau en vrac de sorte que, à l'état introduit, la sonde de niveau de remplissage (20) s'étende essentiellement à la verticale à l'intérieur du contenant (6),
dans lequel un trajet de mesure se déroulant à la verticale pour la mesure de niveau de remplissage est défini par une première électrode de mesure (2) conçue contre la sonde de niveau de remplissage (20), une électrode de délimitation inférieure (4) agencée contre l'extrémité inférieure verticale de ce trajet de mesure définit une délimitation du trajet de mesure avec un point d'extrémité inférieur, un agencement d'électrodes (5) constitue une délimitation supérieure verticale du trajet de mesure avec un point d'extrémité supérieur pour la mesure de niveau de remplissage et comprend tant une électrode de délimitation (12) qu'une autre électrode de mesure (13),
dans lequel sont respectivement isolés l'un de l'autre par un diélectrique tant respectivement l'agencement d'électrodes (5) que l'électrode de délimitation inférieure (4) par rapport à la première électrode de mesure (2) ainsi que l'électrode de délimitation (12) par rapport à l'autre électrode de mesure (13) de l'agencement d'électrodes (5),
dans lequel le point d'extrémité inférieur et supérieur du trajet de mesure est mis à contribution pour la compensation des distorsions systématiques entraînées par des modifications de permittivité du matériau en vrac et ce faisant des signaux analogiques indépendants du matériau sont obtenus pour des trajets de mesure de toutes tailles et une détectabilité indépendante du matériau du point d'extrémité respectif est provoquée en ce que l'électrode de délimitation inférieure (4) est reliée à un premier raccordement d'une première entrée de mesure (7) d'un circuit de mesure (9) et la première électrode de mesure (2) est reliée à un second raccordement de la première entrée de mesure (7) d'un circuit de mesure (9), et l'électrode de délimitation (12) ainsi que l'autre électrode de mesure (13) de l'agencement d'électrodes (5) sont reliées à une autre entrée de mesure (8) du circuit de mesure (9) via un premier et un second raccordement séparés l'un de l'autre,
et en outre une autre électrode est soit constituée par une paroi conductrice du contenant (6) soit, dans la mesure où aucune paroi du contenant (6) n'est conductrice, agencée séparément à l'extérieur contre la paroi du contenant (6),
dans lequel une différence de capacité est constituée en tant que signal différentiel à partir de la modification de capacité détectée au niveau de la première entrée de mesure (7) entre l'électrode de délimitation inférieure (4) et l'autre électrode du contenant (6) ainsi qu'entre la première électrode de mesure (2) et l'autre électrode du contenant (6), et une différence de capacité est constituée en tant que signal différentiel à partir de la modification de capacité détectée au niveau de l'autre entrée de mesure (8) entre l'électrode de délimitation (12) et l'autre électrode du contenant (6) ainsi qu'entre l'autre électrode de mesure (13) et l'autre électrode du contenant (6).

2. Procédé selon la revendication 1, **caractérisé en ce qu'**un point d'extrémité supérieur vertical est mis à disposition au moyen d'un second agencement d'électrodes (5) supplémentaire indépendant de la mesure analogique.

3. Procédé selon la revendication 2, **caractérisé en ce que** le second agencement d'électrodes (5) supplémentaire, par lequel un point d'extrémité ou un point fixe supérieur vertical est mis à disposition, est conçu à l'intérieur ou verticalement au-dessus d'un trajet de mesure maximal possible de la sonde de niveau de remplissage.

4. Procédé selon la revendication 1 à 3, **caractérisé en ce qu'**autant de points d'extrémité ou de points fixes supérieurs verticaux que souhaités sont constitués à l'intérieur ou à l'extérieur d'un trajet de mesure maximal possible de la sonde de niveau de remplissage.

5. Procédé selon la revendication 1 à 4, **caractérisé en ce qu'**au moins un point d'extrémité ou un point fixe est mis à contribution en vue d'obtenir un signal pour la réalisation d'un étalonnage ou d'une correction, automatique, d'une valeur analogique dépendante de la permittivité dans le niveau de remplissage préférentiel respectif.

6. Procédé selon la revendication 1 à 5, **caractérisé en ce qu'**au moins un point d'extrémité inférieur vertical est mis à disposition au moyen d'un second agencement d'électrodes (4) supplémentaire indépendant de la mesure analogique et servant d'électrode de point zéro.

7. Procédé selon la revendication 6, **caractérisé en ce que** le second agencement d'électrodes (4) supplémentaire servant d'électrode de point zéro est positionné en-dessous du trajet de mesure maximal possible de la sonde de niveau de remplissage.

8. Procédé selon la revendication 6 ou 7, **caractérisé en ce que** le second agencement d'électrodes (4) supplémentaire servant d'électrode de point zéro est réalisé suffisamment petit pour que, ce faisant, une mesure analogique soit rendue possible presque à partir d'une pointe de sonde.

9. Procédé selon la revendication 1 à 8, **caractérisé en ce qu'**au moins un point d'extrémité supérieur vertical est mis à disposition au moyen d'un second agencement d'électrodes (5) supplémentaire, lequel point d'extrémité est mis à contribution en tant que dispositif de niveau de remplissage avec lequel un signal de niveau de remplissage indépendant de la mesure analogique est mis à disposition.

10. Procédé selon l'une des revendications 1 à 9, **caractérisé en ce que**, respectivement au niveau d'un point fixe, une électrode d'un second agencement d'électrodes (4, 5) supplémentaire respectif est relié à un premier raccordement d'une entrée de mesure (7, 8) respective, et une électrode avoisinant cette électrode mais agencée de façon isolée par un diélectrique est reliée à un second raccordement de l'entrée de mesure (7, 8) respective, dans lequel respectivement le signal obtenu via le premier ou le second raccordement d'une entrée de mesure commune est inversé et ensuite mis à contribution pour la compensation des distorsions systématiques entraînées par des modifications de permittivité du matériau en vrac.

11. Procédé selon l'une des revendications 1 à 10, **caractérisé en ce que**, lors de la détection d'un point d'extrémité ou fixe supérieur vertical, un signal obtenu et alors correspondant est mis à contribution en tant que signal de départ pour un étalonnage automatique de ce point d'extrémité de la mesure analogique.

12. Dispositif pour réaliser un procédé selon l'une des revendications précédentes, comprenant une sonde de niveau de remplissage (20), un circuit de mesure (9) et un contenant (6) destiné à loger la sonde de niveau de remplissage (20),
dans lequel la sonde de niveau de remplissage (20) peut être introduite essentiellement à la verticale dans le contenant (6) pour mesurer le niveau de remplissage d'un matériau en vrac de sorte que, à l'état introduit, la sonde de niveau de remplissage (20) s'étende essentiellement à la verticale à l'intérieur du contenant (6),
dans lequel la sonde de niveau de remplissage (20) présente
- une première électrode de mesure (2) conçue contre la sonde de niveau de remplissage (20), laquelle électrode de mesure forme un trajet de mesure se déroulant à la verticale pour la mesure du niveau de remplissage,
- une électrode de délimitation inférieure (4) agencée contre l'extrémité inférieure verticale de la sonde de niveau de remplissage (20), laquelle électrode de délimitation définit une délimitation inférieure du trajet de mesure avec un point d'extrémité inférieur, et
- un agencement d'électrodes (5) qui constitue une délimitation supérieure verticale du trajet de mesure avec un point d'extrémité supérieur pour la mesure de niveau de remplissage et comprend une électrode de délimitation (12) ainsi qu'une autre électrode de mesure (13),
dans lequel sont respectivement isolés l'un de l'autre par un diélectrique tant l'agencement d'électrodes (5) que l'électrode de délimitation inférieure (4) respectivement par rapport à la première électrode de mesure (2) ainsi que l'électrode de délimitation (12) par rapport à l'autre électrode de mesure (13) de l'agencement d'électrodes (5), dans lequel le circuit de mesure (9) présente une première entrée de mesure (7) et une autre entrée de mesure (8) avec respectivement un premier et un second raccordement, dans lequel une détectabilité indépendante du matériau du point d'extrémité inférieur et supérieur du trajet de mesure est provoquée en ce que l'électrode de délimitation inférieure (4) est reliée au premier raccordement de la première entrée de mesure (7) et la première électrode de mesure (2) est reliée au second, raccordement de la première entrée de mesure (7), et l'électrode de délimitation (12) ainsi que l'autre électrode de mesure (13) de l'agencement d'électrodes (5) sont reliées à l'autre entrée de mesure (8) via un premier et un second raccordement séparés l'un de l'autre, et dans lequel le contenant (6) présente une autre électrode qui est soit constituée par une paroi conductrice du contenant (6) soit agencée séparément à l'extérieur contre la paroi du contenant (6),
dans lequel le circuit de mesure (9) possède, respectivement au niveau de la première et de l'autre entrée de mesure (7, 8), un circuit différentiel qui, pour émettre une différence de capacité en tant que signal différentiel pour une compensation des distorsions systématiques entraînées par des modifications de permittivité du matériau en vrac, est conçu de telle sorte qu'un signal différentiel soit formé à partir d'une modification de capacité détectée au niveau de la première entrée de mesure (7) entre l'électrode de délimitation inférieure (4) et l'autre électrode du contenant (6) ainsi qu'entre la première électrode de mesure (2) et l'autre électrode du contenant (6) et un signal différentiel soit formé à partir d'une modification de capacité détectée au niveau de l'autre entrée de mesure (8) entre l'électrode de délimitation inférieure (12) et l'autre électrode du contenant (6) ainsi qu'entre l'autre électrode de mesure (13) et l'autre électrode du contenant (6).

13. Dispositif selon la revendication 12, **caractérisé en ce que** le circuit de mesure (9) possède un équipement de vérification de la vraisemblance (10), lequel est conçu pour autoriser l'exploitation d'un signal différentiel pour la compensation des distorsions systématiques entraînées par des modifications de permittivité du matériau en vrac soit uniquement dans le cas d'un signal différentiel positif soit dans le cas d'un signal différentiel négatif.
